# FASCICULE DE BREVET EUROPEEN

(11) **EP 1 646 911 B1**
(45) Date de publication et mention de la délivrance du brevet: **21.03.2007**
(21) Numéro de dépôt: 04767324.9
(22) Date de dépôt: 11.06.2004
(51) Int. Cl.: G03B 17/56, F16M 13/02

(54) **DISPOSITIF POUR LA PRISE DE PHOTOGRAPHIE**
VORRICHTUNG ZUM PHOTOGRAPHIEREN
DEVICE FOR TAKING PHOTOGRAPHS

(30) Priorité: 13.06.2003 FR 0307171
(43) Date de publication de la demande: 19.04.2006
(73) Titulaire: Giacomuzzi, Lionel, 38100 Grenoble (FR)
(72) Inventeur: Giacomuzzi, Lionel, 38100 Grenoble (FR)
(86) Numéro de dépôt international: PCT/FR2004/001459
(87) Numéro de publication internationale: WO 2005/003855

(56) Documents cités:
- EP-A- 0 838 176
- FR-A- 2 668 872
- GB-A- 1 240 837
- US-A- 4 614 943
- US-A- 5 348 260
- US-A1- 2002 171 757
- US-B1- 6 633 328

## Description

### DOMAINE DE L'INVENTION

La présente invention concerne de façon générale le domaine des dispositifs pour la prise de photographie.

De façon davantage particulière, la présente invention concerne un dispositif pour la prise de photographie destiné à être utilisé pour une prise de photographie avec délivrance rapide de la photographie, ce dispositif étant destiné à être utilisé dans un local professionnel de commerce ou de service, en particulier de service grand public, par exemple un salon de coiffure.

### ART ANTÉRIEUR

On connait déjà des dispositifs de prise de photographie incluant un appareil de prise de photographie qui est monté sur un bras articulé.

Le document US (document D1) de N° de publication US 2002/0171757 A1 (N° de dépôt 10/144,931) décrit un système réglable de prise d'image qui inclut un appareil de prise de photographie (100) qui est monté sur un bras articulé (102). Ce système est un système de prise d'image de bureau permettant de photographier un document (108) en pouvant régler la position de l'appareil de prise de photographie.

Le document FR (document D2) de N° de publication FR 2668872 A1 (N° de dépôt 90 13836) décrit un appareil réglable d'observation d'objet qui inclut un appareil de prise d'image (5) qui est monté sur un bras articulé (3).Ce système est un système de prise d'image de métrologie permettant de photographier un objet (7) monté sur un plateau (2) en pouvant régler la position de l'appareil de prise d'image.

Ces documents D1 et D2 représentatifs de l'art antérieur sont des dispositifs permettant de prendre des images d'un objet en pouvant régler précisément la position spatiale de l'appareil de prise d'image puis en immobilisant l'appareil de prise d'image dans la position ainsi réglée.

Ces dispositifs de l'art antérieur ne sont pas spécifiquement adaptés pour constituer un ensemble fonctionnel permettant de remplir la totalité des fonctions qui sont nécessaires pour la photographie de portrais de personnes, c'est-à-dire toutes les fonctions sui sont remplies dans un "studio de photographie" chez un photographe professionnel, à savoir :
- le positionnement réglable dans l'espace et immobilisable de l'appareil photo ; mais aussi
- l'adaptation réglable dans l'espace d'un écran de fond ou d'arrière-plan ; et aussi
- l'adaptation réglable des éclairages; et aussi
- la transmission de l'information numérique d'image directement sur une imprimante et/ou un moyen de mémoire d'image.

A ce jour, les personnes qui souhaitent disposer de façon rapide d'une photographie d'elles-mêmes, d'un de leurs proches ou d'un animal de compagnie disposent de trois solutions : soit prendre la photographie et la faire développer ou l'imprimer elles-mêmes, soit se rendre chez un photographe qui assurera la prise de vue, soit utiliser un appareil automatique de prise de photographie rapide.

Dans tous ces cas, la personne est obligée de soigner spécifiquement sa tenue (coiffure, habillement, etc.) ou celle du sujet de photographie (enfant ou animal, etc.). Cette double opération constitue une démarche spécifique.

Dans le cas d'une prise de photographie chez un photographe, il est nécessaire de prendre rendez-vous à l'avance ou de s'assurer que le photographe sera présent. Par ailleurs, on peut noter que les boutiques de photographe ne délivrent pas toujours de façon quasi-immédiate la photographie prise. La personne doit donc souvent revenir à la boutique récupérer sa photographie. La démarche globale est donc fastidieuse et consommatrice de temps. En outre, on trouve de plus en plus rarement des boutiques de photographe assurant la prise de photographie (problème de rentabilité globale).

Dans le cas d'un appareil automatique de prise de photographie rapide, il peut arriver que l'appareil soit en panne, ce qui nécessite que la personne consomme du temps pour en trouver un autre et s'y rendre. En outre, les photographies ainsi prises ne sont pas toujours de bonne qualité et la personne n'a aucun conseil esthétique de la part d'un professionnel.

Il existe donc un besoin pour un dispositif de prise de photographie permettant la délivrance rapide de photographies de qualité, sans la nécessité d'une démarche spécifique fastidieuse de la part de la personne souhaitant disposer d'une telle photographie.

### RÉSUMÉ ET AVANTAGES DE L'INVENTION

Le besoin précité est satisfait en proposant un dispositif de prise de photographie installé de préférence dans un local commercial, par exemple un salon de coiffure.

Selon une caractéristique essentielle de l'invention, on propose un dispositif pour la prise de photographie selon la revendication 1.

Selon une variante, ladite première extrémité peut être fixée à une paroi verticale stable telle qu'un mur.

Selon une autre variante, ledit moyen de montage comprend une platine de support comportant, montés sur elle, ledit appareil de prise de photographie et une liaison libre en rotation fixée à demeure, de façon rigide et à la verticale sur ledit moyen de bras articulé.

Selon encore une autre variante, ladite platine de support comprend en outre un moyen de fixation permettant de fixer ledit appareil de prise de photographie sur ladite platine de support.

Ainsi, la personne qui souhaite une photographie n'a plus besoin de mettre en oeuvre une démarche spécifique. Elle peut profiter de son passage, en général périodique, chez le coiffeur pour la prise de vue. Le fait de réaliser la prise de vue après que le sujet de photographie a été coiffé a pour avantage que la tenue du sujet est d'emblée adaptée à la prise de photographie, sans la nécessité d'un effort circonstanciel spécifique. De façon davantage détaillée, une retouche de maquillage préalable à la prise de photographie peut tout à fait être réalisée dans le salon de coiffure, le cas échéant en bénéficiant des conseils du coiffeur qui est un professionnel qui a certainement une compétence optimum du point de vue de l'esthétique. L'opération globale "préparation du sujet de photographie et prise de vue" est donc concentrée en un lieu unique et en un temps court, ce qui est très avantageux. Le fait que le professionnel qui effectue la prise de photographie ne soit plus un "photographe professionnel" (qui a fondamentalement une compétence maximum pour la technique de prise de photographie et une compétence plus secondaire pour l'aspect esthétique) mais un "professionnel du domaine esthétique, tel qu'un coiffeur" (qui a fondamentalement une compétence maximum pour l'aspect esthétique et une compétence plus secondaire pour la technique de prise de photographie) n'est pas un inconvénient de ce jour parce que l'évolution technique récente des appareils photographiques, en particulier numériques, et des imprimantes a pour conséquence que les performances actuelles rendent la technique de prise de photographie beaucoup plus facile pour une personne peu qualifiée techniquement.

De façon davantage spécifique, ledit bras articulé sur lequel est fixé l'appareil de prise de photographie est un bras articulé du type communément appelé "acrobate" tel qu'on en trouve dans un salon de coiffure, ledit bras articulé, dans sa fonction originale, supportant un casque de coiffure.

Dans sa position d'attente de prise de photographie, le bras articulé est replié et relevé à une hauteur d'environ 2,50 mètres (position haute) de telle sorte qu'il ne gêne pas le fonctionnement normal du salon de coiffure/toilettage et qu'il ne soit pas à portée de main des enfants. Dans sa position de prise de photographie, le bras articulé est étendu et écarté du mur. En particulier, il peut être abaissé jusqu'à environ 1,50 mètres (position basse) pour la prise de photographie. Sa plage de manoeuvrabilité permet de l'orienter selon les souhaits vers la gauche/droite, vers le bas/haut et de façon circulaire. Il peut ainsi être adapté à toutes les configurations de salon de coiffure/toilettage.

Lors d'une prise de photographie, le sujet de photographie s'installe debout ou assis sur un siège disposé à cet effet dans le salon. Un paravent déplaçable est alors éventuellement tiré pour isoler le sujet du reste du salon. Le bras articulé est tiré pour être écarté du mur et abaissé et la prise de photographie est effectuée. Immédiatement après, le paravent est ramené à sa position initiale, le bras articulé est replié contre le mur et relevé. L'opération de prise de photographie prise dans sa globalité est très rapide et n'entrave pas le fonctionnement général du salon.

De façon davantage particulière, pour réaliser l'opération consistant à étendre le bras articulé et à le replier contre le mur, on réutilise de façon astucieuse la fonctionnalité native du bras articulé pour casque de coiffure. De façon native, un tel bras articulé est muni d'un système de ressorts qui a pour effet d'équilibrer exactement le poids du casque de telle sorte que celui-ci reste toujours dans la position dans laquelle il est mis par un opérateur. Dans le cas du dispositif de prise de photographie, on conserve le même système de ressorts ; mais puisque l'appareil de prise de photographie qui remplace le casque est plus léger que ce dernier, lorsque l'on replie le bras articulé contre le mur, ce dernier remonte toujours en position haute (environ 2,50 mètres). En outre, lors de la prise de photographie, l'opérateur prend en main l'appareil de prise de photographie - qui sinon tendrait à remonter en position haute du fait de l'effet de rappel élastique du système de ressorts - et réalise sa prise de photographie selon un mode horizontalité automatique du cadrage qui est auto-assuré par la platine de support qui est par construction toujours maintenue à l'horizontale du fait que la liaison libre en rotation suivant l'axe vertical 15 qui est liée au bras articulé comme mentionné ci-avant mais qui est aussi liée de façon rigide à ladite platine de support reste toujours à la verticale (axe vertical 15), quelle que soit la position du bras articulé. Cette particularité de maintien d'orientation verticale de l'axe vertical 15 de l'extrémité libre du bras articulé quelle que soit la position dans l'espace de l'extrémité libre du bras articulé résulte de la construction mécanique globale spécifique du bras articulé, comme il est bien connu de l'art.

Compte tenu de l'effet de rappel élastique et de l'effet d'horizontalité automatique du cadrage, les opérations de prises de photographie sont fortement simplifiées pour l'opérateur, lequel n'a nul besoin de détenir des compétences spéciales en matière de photographie. Cette caractéristique du maintient mécanique automatique de l'horizontalité de l'axe de visée de l'appareil photographique tandis que la personne qui manipule l'appareil photographique peut librement le déplacer dans les trois dimensions de l'espace (dans les limites de débattement du bras articulé bien entendu) en vue d'effectuer le cadrage correct du sujet à photographier est une caractéristique très avantageuse pour faciliter la prise de photographie correcte sans que la personne qui manipule l'appareil photographique ne soit un "photographe professionnel" mais tandis que cette personne peut être au contraire une personne "amateur" sans aucune compétence spécifique dans le domaine de la prise de photographie. La très grande sensibilité des appareils photographiques numériques actuels a pour conséquence que l'éclairage général normal d'une salle telle qu'un salon de coiffure est toujours suffisamment intense pour qu'il n'y ait plus besoin d'aucune installation d'éclairage spécifique pour éclairer le sujet à photographier, ce qui facilite encore le travail de prise de photographie par cette personne non expérimentée.

L'appareil de prise de photographie est un appareil numérique qui est de préférence relié par un port infrarouge (liaison sans fil) à une imprimante numérique pour une impression directe des photographies. La délivrance des photographies est donc quasi-instantanée, ce qui est avantageux.

Dans le cas où l'appareil de prise de photographie est un appareil classique alimenté par accumulateur rechargeable ou par pile, aucune installation électrique n'est nécessaire pour son fonctionnement. Cependant, compte tenu de la quantité éventuellement importante de photographies prises dans une période donnée (la journée, la semaine, ...), il peut être avantageux de disposer d'un appareil photographique alimenté électriquement de manière à éviter de recharger l'accumulateur ou de changer la pile trop souvent. Dans ce cas, il est avantageux d'utiliser de façon judicieuse la construction native du bras articulé : comme décrit de façon détaillée ci-après, on peut installer le transformateur tension alternative du secteur-courant continu basse tension nécessaire pour l'alimentation électrique de l'appareil photographique à l'intérieur du socle permettant le montage de la partie non libre du bras articulé sur la plaque murale mentionnée ci-avant. Ce faisant, les normes de sécurité électrique sont assurées. L'acheminement du courant électrique depuis le transformateur jusqu'à l'appareil photographique est réalisé par l'intermédiaire d'un fil électrique qui court à l'intérieur du bras articulé, comme prévu de façon native. Il est donc à noter que d'une part la sécurité en fonctionnement est assurée et que, d'autre part, aucun aménagement spécifique n'est à prévoir pour l'alimentation de l'appareil photographique puisque le bras articulé incorpore de façon native les aménagements (socle et gaine de passage de fil électrique) le permettant. Les coûts sont réduits et la mise en oeuvre est facilitée.

De façon avantageuse, l'imprimante numérique peut présenter plusieurs mises en page : portrait, photos d'identité par deux ou autres. L'imprimante numérique peut en outre disposer d'une fonction de coupe automatique, ce qui permet de délivrer au client des photos "à dimension".

L'imprimante peut être placée au niveau de la caisse du salon. Ainsi, en payant sa note de coiffure/toilettage et de photographie, la personne récupère dans la foulée ses photos, ce qui est rapide, simple et commode.

L'imprimante peut être placée sous un capot de protection maintenu sous pression afin d'assurer la protection de l'imprimante vis-à-vis des particules de poussière, des cheveux et/ ou des poils et autres matières particulaires que l'on trouve dans un salon de coiffure/toilettage.

De manière avantageuse, l'imprimante peut se voir adjoindre un dispositif de stockage en masse permettant d'archiver les photographies prises. Ainsi, le client disposera de la possibilité d'obtenir des photographies de façon immédiate et/ou de la possibilité de venir ultérieurement demander de nouveaux tirages. En outre, la coiffure et/ou le toilettage fraîchement réalisés étant ainsi sauvegardés, le client disposera de la faculté de les consulter lors de sa prochaine visite au salon afin de disposer d'une visualisation précise d'un état de présentation qu'il souhaite faire réaliser à nouveau ou sur la base duquel il souhaite envisager des modifications. Bien entendu, le prestataire de service (le "patron" du salon) peut envisager de faire payer un tel service spécifique.

D'autres objets, caractéristiques et avantages de l'invention apparaîtront au vu de la description détaillée qui suit, que l'on lira en relation avec les dessins annexés.

### DESCRIPTION DES DESSINS

Parmi les dessins annexés :
la figure 1 représente un aperçu général du dispositif de prise de photographie installé dans un contexte "prêt à l'emploi", la position d'attente de prise de photographie et la position de prise de photographie étant toutes deux représentées ;
la figure 2 est une vue en perspective détaillée du dispositif de prise de photographie dans sa position d'attente de prise de photographie, la vue représentant ses différents éléments constitutifs ;
la figure 3 est une vue en perspective schématique du dispositif de prise de photographie montrant spécifiquement les types des liaisons cinématiques du bras articulé ;
la figure 4 est une vue en coupe davantage détaillée d'une articulation du bras articulé qui constitue un des éléments du dispositif selon l'invention ;
la figure 5 est un vue en perspective d'un socle mobile qui constitue un autre des éléments du dispositif selon l'invention ; et
la figure 6 est une vue en coupe schématique d'une valise spécifique destinée à inclure le dispositif selon l'invention.

### DESCRIPTION DÉTAILLÉE DE L'INVENTION

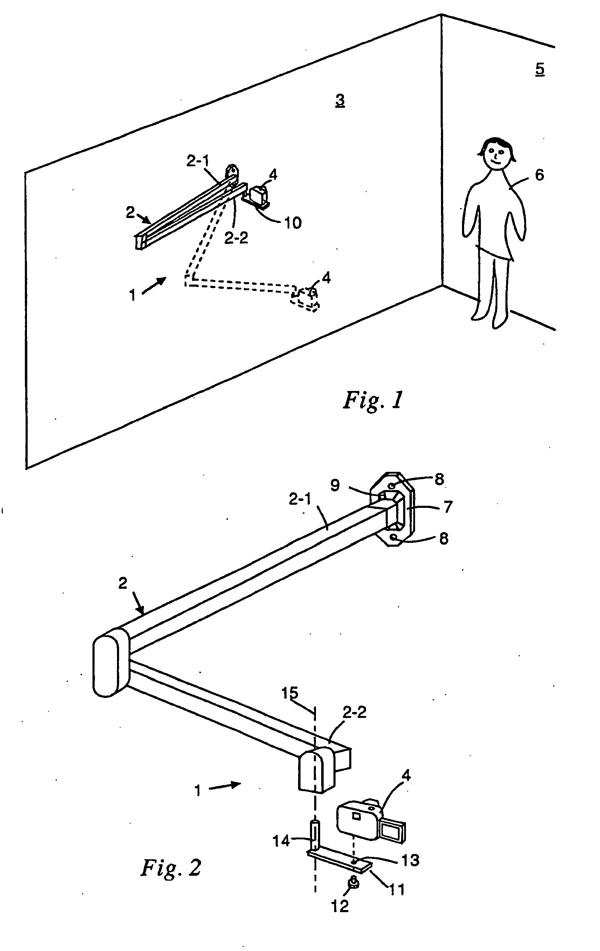

La figure 1 représente le dispositif de prise de photographie 1 installé dans un contexte "prêt à l'emploi", la position d'attente de prise de photographie étant représentée en trait plein et la position de prise de photographie étant représentée en pointillés. Ce dispositif 1 comprend un moyen de bras articulé 2 comprenant une première extrémité 2-1 destinée à être fixée sur un support vertical stable 3 tel qu'un mur et une seconde extrémité libre 2-2, la seconde extrémité libre 2-2 étant extensible en position de prise de photographie et rétractable en position d'attente de prise de photographie, tel que respectivement représenté en pointillés et en trait plein. Le dispositif inclut en outre un appareil de prise de photographie 4 fixé au moyen de bras articulé 2 au niveau de sa seconde extrémité libre 2-2.

En fonctionnement, un opérateur prend en main l'appareil de prise de photographie 4 et étire la seconde extrémité libre 2-2 du moyen de bras articulé tout en l'abaissant depuis la position d'attente de prise de photographie (à environ 2,50 mètres du sol) jusqu'à la position de prise de photographie (à environ 1,50 mètres du sol); dans le même temps, l'opérateur oriente l'ensemble "extrémité libre-appareil de prise de photographie" suivant les directions vers la gauche/droite, vers le haut/le bas et de façon circulaire de façon à amener l'appareil de prise de photographie 4 dans la position de prise de photographie adéquate pour réaliser une prise de vue du sujet 6 qui est isolé du reste du salon par un paravent déplaçable 5. Dès que la prise de photographie est terminée, l'opérateur relâche l'appareil de prise de photographie 4 et donc l'extrémité libre 2-2, qui, grâce au système de ressorts (non représenté) incorporé de façon native dans le moyen de bras articulé, revient de façon élastique et instantanée dans la positon d'attente de prise de photographie représentée en trait plein. Le paravent déplaçable peut alors être déplacé pour être rangé. Le dispositif de prise de photographie 1 est alors prêt pour une nouvelle prise de photographie.

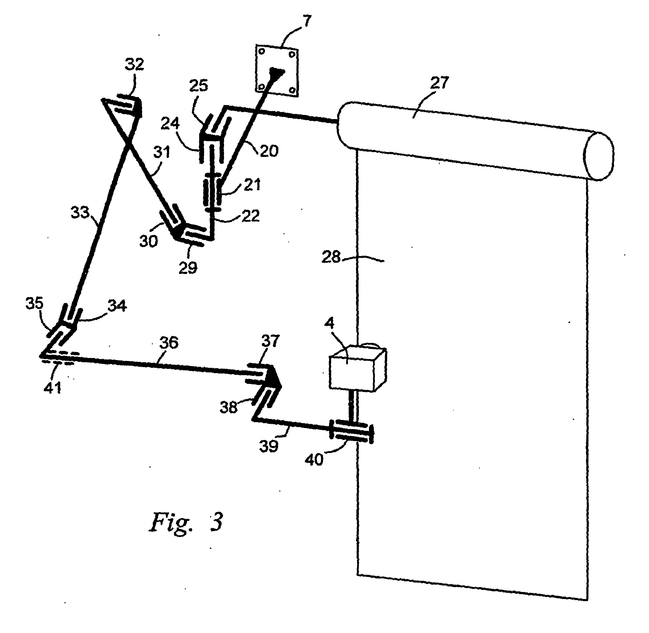

La figure 2 est une vue en perspective détaillée du dispositif de prise de photographie 1 dans sa position d'attente de prise de photographie, la vue représentant ses différents éléments constitutifs. On reconnaît le moyen de bras articulé, composé d'une première extrémité 2-1 et d'une seconde extrémité libre 2-2.

La première extrémité est destinée à être fixée sur un support vertical stable tel qu'un mur (non représenté) au moyen d'une plaque murale 7 et de vis 8. Un socle 9 constitue une partie de jonction native entre la plaque murale 7 et la première extrémité 2-1 du moyen de bras articulé. C'est à l'intérieur de ce socle 9 que, le cas échéant (dans le cas d'un appareil de prise de photographie alimenté par courant électrique), un transformateur tension alternative du secteur-courant continu basse tension (non représenté) serait logé, le fil électrique (non représenté) destiné à être relié à l'appareil de prise de photographie 4 courant à l'intérieur du moyen de bars articulé 2, tout comme dans le cas d'un raccordement classique sur un casque de salon de coiffure.

La seconde extrémité libre 2-2, dont le casque de salon de coiffure a été enlevé, reçoit en montage l'appareil de prise de photographie 4 qui est substitué au casque d'origine. Le montage de l'appareil de prise de photographie 4 sur la seconde extrémité libre 2-2 s'effectue par l'intermédiaire d'un moyen de montage 10 qui comprend une platine de support 11 comportant, montés sur elle, l'appareil de prise de photographie 4 et une liaison libre en rotation 14 fixée à demeure, de façon rigide et à la verticale sur le moyen de bras articulé 2, de façon plus précise sur la seconde extrémité libre 2-2 sur lequel un évidement (non représenté) est prévu de façon native pour recevoir la liaison libre en rotation 14. La platine de support 11 comprend en outre un moyen de fixation 12, 13 permettant de fixer l'appareil de prise de photographie 4 sur la platine de support 11. Selon le mode de réalisation présenté, le moyen de fixation 12, 13 est constitué par un écrou fileté 12 qui est vissé dans un trou taraudé 13 qui est ménagé dans ma platine de support 11.

Il est à noter que c'est la structure mécanique stable et rigide du dispositif de prise de photographie 1, de façon plus précise la fixation stable sur une paroi verticale de la première extrémité 2-1 du moyen de bras articulé 2 comme assuré au moyen de la plaque murale 7 et des vis 8 ainsi que la fixation à demeure, de façon rigide et à la verticale de la liaison libre en rotation 14 sur la seconde extrémité libre 2-2 du moyen de bras articulé 2, qui assure le maintien à l'horizontale de la platine de support 11 quelle que soit la position du moyen de bras articulé 2, d'où ainsi l'horizontalité automatique du cadrage lors d'une prise de photographie, comme mentionné ci-avant.

La figure 3 est une vue en perspective schématique du dispositif de prise de photographie montrant spécifiquement les types des liaisons cinématiques du bras articulé. Sur cette figure, la plaque murale 7 est fixée sur un élément fixe du local (non représenté), par exemple un mur. Depuis la plaque murale 7, s'étend horizontalement une tige fixe 20 munie d'une articulation 21 à son extrémité libre qui s'articule avec une tige verticale 22 qui s'étend à la fois dessus et dessous l'articulation 21. Cette articulation 21 est du type rotation autour de l'axe vertical 23 et immobilisation suivant l'axe vertical 23. Sur l'extrémité supérieure de la tige 22 est fixée une articulation 24 d'axe de rotation vertical dont la partie tournant est fixée à une articulation 25 d'axe de rotation horizontal dont la partie tournant est fixée à une tige horizontale 26. La tige horizontale 26supporte à son extrémité libre un boîtier d'écran 27 à partir duquel s'étend verticalement vers le bas un écran rétractable 28. Sur l'extrémité inférieure de la tige 22 est fixée une articulation 29 d'axe de rotation horizontal dont la partie tournant est fixée à une articulation 30 d'axe de rotation incliné dont la partie tournant est fixée à une tige inclinée 31 (correspondant à la partie de bras articulé 2-1 de la figure 2).

Sur l'extrémité supérieure de la tige 31 est fixée une articulation 32 d'axe de rotation horizontal dont la partie tournant est fixée à une tige inclinée 33 (correspondant à la partie de bras articulé 2-2 de la figure 2). Sur l'extrémité inférieure de la tige 33 est fixée une articulation 34 d'axe de rotation suivant l'axe longitudinal de la tige 33 dont la partie tournant est fixée à une articulation 35 d'axe de rotation horizontal dont la partie tournant est fixée à une tige horizontale 36.

Sur l'extrémité distale de la tige 36 est fixée une articulation 37 d'axe de rotation horizontal dont la partie tournant est fixée à une articulation 38 d'axe de rotation horizontal dont la partie tournant est fixée à une tige horizontale 39. Sur l'extrémité distale de la tige 39 est fixée une articulation 40 d'axe de rotation horizontal dont la partie tournant est fixée à une platine de support 41 (correspondant à la platine de support 11 de la figure 2) comportant, monté sur elle, l'appareil de prise de photographie 4.

Toutes les articulation, à savoir 21, 24, 25, 29, 30, 32, 34, 35, 37, 38 et 40 sont des articulations munies d'un moyen de blocage par vis ou manette. Optionnellement, l'une quelconque de ces articulations peut être immobilisée de façon permanente par une vis ou par tout autre moyen de fixation qui n'est pas prévu pour être actionné par l'utilisateur. Optionnellement, chaque articulation peut être montée avec un frein permanent à friction dont la force d'immobilisation par friction est suffisante pour que la position du bras articulé reste fixe sous les effets des poids des composants mais dont la force de friction n'est pas trop grande pour permettre que l'utilisateur puisse modifier les positions de réglage des différents éléments articulés du bras articulé.

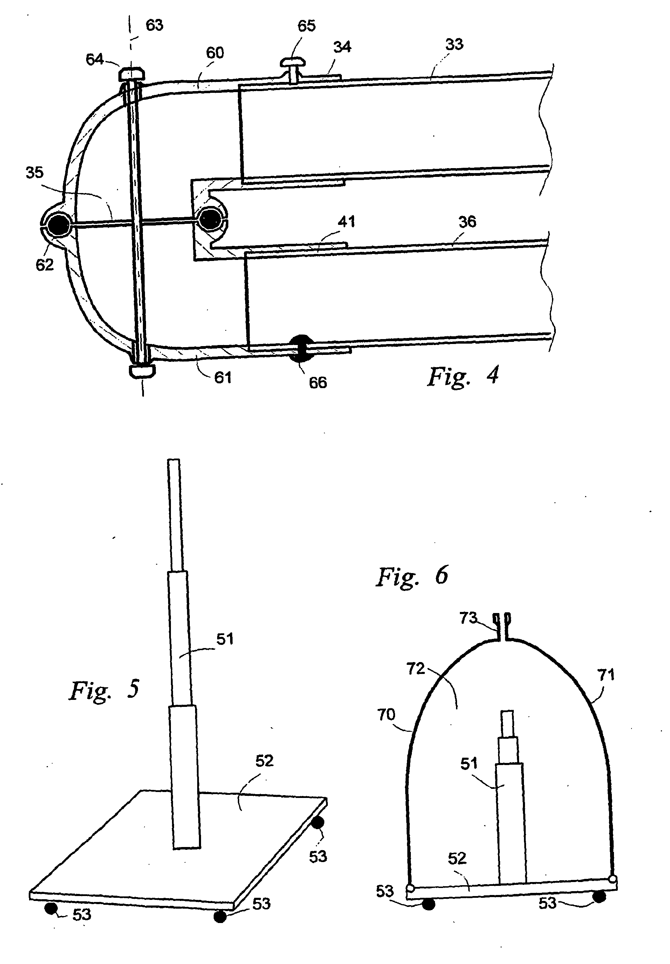

L'articulation 25 est utile pour faire passer le boîtier d'écran 27 de l'autre côté du bras articulé, comme représenté sur la figure 4. Ainsi, le boîtier d'écran 27 est toujours horizontal mais est inversé, ce qui fait que la face de l'écran 28 qui sert d'arrière-plan au sujet à photographier est alors la face arrière par rapport à la face de l'écran 28 qui sert d'arrière-plan au sujet à photographier quand le dispositif est configuré comme représenté sur la figure 3. De même, l'articulation 35 est utile pour faire passer la tige 36 et donc l'appareil photographique 4 de l'autre côté du bras articulé, comme représenté sur la figure 4. Dans ce cas, on peut aussi ajouter une articulation 41 d'axe de rotation suivant l'axe longitudinal de la tige 36 (représentée en pointillés sur la figure 3) pour permettre aussi ce passage de l'autre côté du bras articulé.

L'articulation 38 est utile pour faire passer l'appareil photographique 4 de la position horizontale (représentée sur la figure 3) pour une photographie en mode paysage à une position verticale (non représentée) pour une photographie en mode portrait.

la figure 4 est une vue en coupe davantage détaillée d'une articulation du bras articulé qui constitue un des éléments du dispositif selon l'invention. Sur cette figure, on distingue en détails une articulation entre deux quelconques des tiges (par exemple 22, 31, 33, 36 ou 39) constituant le bras articulé selon l'invention. Dans l'exemple de la figure 4, il s'agit d'une articulation entre les tiges 33 et 36. Plus exactement, cette articulation constitue l'ensemble des trois articulations 34, 35 et 41 entre les tiges 33 et 36, comme décrit ci-avant en relation avec la figure 3.

L'articulation 34, qui est une articulation de rotation autour d'un axe longitudinal à la tige 33, est obtenue par la tige tubulaire 33 qui s'emboîte dans un alésage correspondant d'un boîtier 60. Une vis de blocage 65 permet d'immobilise cette articulation. D'une manière semblable, l'articulation 41, qui est une articulation de rotation autour d'un axe longitudinal à la tige 36, est obtenue par la tige tubulaire 36 qui s'emboîte dans un alésage correspondant d'un boîtier 61. Un moyen de blocage 66 permet d'immobilise cette articulation. Sur la figure, on voit que le moyen de blocage 66 est en fait un rivet, c'est-à-dire que dans l'exemple représenté, l'articulation 41 est condamnée du fait que le moyen de blocage 66 n'est pas déblocable. L'articulation 35, qui est une articulation autour d'un axe perpendiculaire aux tiges 33 et 36, est obtenue par un pivotement relatif entre les boîtiers 60 et 61. Un joint torique 62 (en Rizlan, marquez déposée) permet un glissement doux, sans grincement ni à-coups, entre les deux boîtiers. Un boulon traversant 64 permet de constituer une vis de blocage pour immobiliser l'articulation, et aussi pour monter et démonter le système. Le boîtiers 60 et 61 sont creux, et comme les tiges tubulaires 33 et 36 sont creuses, l'ensemble constitue une voie libre interne continue qui permet un passage éventuel de câbles ou autres dispositifs à l'intérieur.

De préférence, les articulations utilisent un joint de type Rizlan (marque déposée) qui constitue un contact auto-lubrifiant qui évite le phénomène bien connu de grincement ou de haut brisque de position de réglage. De préférence, chaque articulation, en particulier chaque articulation horizontale, peut inclure un ressort permettant de constituer une force de rotation permanente qui s'oppose à une rotation due au poids des la partie supportée par cette articulation. Un tel ressort interne de compensation de poids est un mécanisme bien connu en soi qui n'a pas besoin d'être décrit plus en détails ici.

Selon une variante, la plaque de base 7 peut être fixée sur une console verticale (figure 5) qui comprend une tige verticale 51 fixée sur un socle 52 éventuellement muni de roulettes 53, ceci afin de constituer l'ensemble du dispositif selon l'invention d'une façon librement déplaçable sur le sol du local.

Par report à la figure 6, selon une autre variante, le dispositif selon l'invention est démontable et logeable dans une valise spécialement conçue pour cela. Cette valise est constituée par un fond qui peut être constitué directement par le socle 52 (figure 5) décrit précédemment, et par deux demi-coques en plastique 72, 72 articulées sur le socle 52 et qui incluent un élément de poignée 73. Les deux coques 70, 71 peuvent s'ouvrir pour libérer le socle 52, le montant vertical 51 et tous les éléments partiellement démontés constituant l'ensemble du dispositif de l'invention, en particulier le bras articulé, et éventuellement l'appareil photo et l'imprimante. Ainsi, le dispositif devient aisément transportable.

De préférence chaque tige est un tube rigide d'un diamètre d'environ 5 cm, en matière plastique, en métal ferreux, ou de préférence en aluminium ou alliage d'aluminium, éventuellement peint ou anodisé.

On peut envisager d'ajouter une console fixable au plafond pour relier de façon fixe la plaque 7 du dispositif au plafond du local, dans le cas où l'utilisateur de veut pas ou ne peut pas installer le dispositif contre un mur du local.

Selon une variante, l'imprimante peut être fixés sur la plaque de base 7 ou sur la console 51. En outre, un moyen supplémentaire d'éclairage ou de flash peut être monté de façon fixe ou amovible sur leu des éléments du bras articulé, par exemple la tige 31 ou 33.

Le dispositif selon l'invention constitue un "studio photo intégré", c'est-à-dire incluant tous les éléments permettant une prise de photographie dans de bonnes conditions, à savoir un appareil photo monté sur un bras articulé, un écran d'arrière-plan, une imprimante et éventuellement un moyen supplémentaire d'éclairage ou de flash.

Le dispositif selon l'invention qui constitue ainsi un studio photo intégré peut être utilisé en particulier pour des salons de coiffure, des opticiens, des boutiques d'accessoires pour cérémonies de mariage, des boutiques de luxe, des boutiques d'habillement, des bijouteries, un cabinet de chirurgien esthétique, des maisons de retraite, des bureaux de tabac, etc.

Bien qu'un mode de réalisation particulier de la présente invention ait été décrit, il doit être bien compris que la présente invention peut être mise en oeuvre selon d'autres variantes de réalisation et alternatives. Par exemple, le moyen de fixation 12, 13 pourrait être constitué par d'autres éléments que l'ensemble écrou fileté 12 et trou taraudé 13 représenté. Tous les équivalents techniques qui s'inscrivent dans le cadre des revendications annexées sont destinés à être protégés par la présente demande de brevet.

Bien que la présente invention ait essentiellement fait référence à un salon de coiffure/toilettage, il est bien entendu qu'un tel dispositif de prise de photographie pourrait être aisément installé en un lieu autre qu'un salon de coiffure/toilettage (centres de thalassothérapie et/ou de remise en forme, hall de grands hôtels, en adjonction de boutiques de luxe, hall d'attente d'un aéroport, ...).

## Revendications

1. Dispositif pour la prise de photographie (1), comprenant :
un appareil de prise de photographie (4) ;
un moyen de bras articulé (2) comprenant une première extrémité (2-1) destinée à être fixée sur un support stable (3) et une seconde extrémité libre (2-2), ledit appareil de prise de photographie est fixé audit moyen de bras articulé (2) au niveau de ladite seconde extrémité (2-2) dudit bras articulé, et ladite seconde extrémité (2-2) dudit moyen de bras articulé est extensible en position de prise de photographie et rétractable en position d'attente de prise de photographie ; et
un moyen de montage (10) qui est prévu pour monter ledit appareil de prise de photographie (4) sur ledit moyen de bras articulé (2) ;
**caractérisé en ce que** ledit dispositif comprend en outre :
un écran d'arrière-plan (27, 28) qui est fixé sur ledit moyen de bras articulé (2) ; et
une imprimante pour imprimer des photographies qui ont été prises par ledit appareil de prise de photographie (4).

2. Dispositif pour la prise de photographie (1) selon la revendication 1, **caractérisé en ce qu'**il comprend en outreun moyen d'articulation permettant de faire basculer l'ensemble constitué par ledit bras articulé et ledit appareil de prise de photographie de l'autre côté par rapport à ledit moyen de montage (10), d'où il résulte que l'utilisateur peut ainsi manoeuvrer le bras articulé pour pouvoir prendre une photographie avec ledit appareil de prise de photographie (4) situé soit à gauche soit à droite du bras articulé, selon ses souhaits.

3. Dispositif pour la prise de photographie (1) selon la revendication 1 ou 2, **caractérisé en ce qu'**il comprend en outre un moyen d'articulation permettant de faire basculer ledit écran de l'autre côté par rapport à ledit moyen de montage (10), d'où il résulte que l'utilisateur peut ainsi manoeuvrer l'écran pour pouvoir prendre une photographie avec ledit appareil de prise de photographie (4) situé soit à gauche soit à droite du bras articulé, selon ses souhaits.

4. Dispositif pour la prise de photographie (1) selon l'une quelconque des revendications précédentes, **caractérisé en ce que** l'écran présente deux faces opposées présentant un aspect visuel différent, d'où il résulte que l'utilisateur peut manoeuvrer l'écran pour l'inverser afin que l'arrière-plan de la photographie soit visuellement différent en fonction de la face de l'écran choisie.

5. Dispositif pour la prise de photographie (1) selon l'une quelconque des revendications précédentes, **caractérisé en ce que** ladite première extrémité (2-1) peut être fixée à une paroi verticale stable (3) telle qu'un mur.

6. Dispositif pour la prise de photographie (1) selon l'une quelconque des revendications précédentes, **caractérisé en ce que** ledit moyen de montage (10) comprend une platine de support (11) comportant, montés sur elle, ledit appareil de prise de photographie (4) et une liaison libre en rotation (14) fixée à demeure sur ledit moyen de bras articulé (2).

7. Dispositif pour la prise de photographie (1) selon la revendication 6, **caractérisé en ce que** ladite platine de support (11) comprend en outre un moyen de fixation (12, 13) permettant de fixer ledit appareil de prise de photographie (4) sur ladite platine de support (11).

8. Dispositif pour la prise de photographie (1) selon l'une quelconque des revendications précédentes, **caractérisé en ce qu'**il comprend en outre un moyen de mémoire pour conserver en mémoire, sous forme d'archives, lesdites photographies prises précédemment.

9. Dispositif pour la prise de photographie (1) selon l'une quelconque des revendications précédentes, **caractérisé en ce qu'**il comprend en outre une connexion sans fil, en particulier une connexion hertzienne ou une connexion par infra-rouges, pour établir une liaison de communication entre ledit appareil de prise de photographie (4) et ladite imprimante et/ou ledit moyen de mémoire.

10. Dispositif pour la prise de photographie (1) selon l'une quelconque des revendications précédentes, **caractérisé en ce qu'**il comprend en outre un moyen d'éclairage ou de flash monté de façon fixe sur ledit bras articulé.

## Claims

1. Photograph taking device (1), comprising:
a photograph taking apparatus (4);
an articulated arm means (2) comprising a first end (2-1) to be fixed to a stable support (3) and a second free end (2-2); said photograph taking apparatus is fixed to said articulated arm means (2) at said second end (2-2) of said articulated arm, and said second end (2-2) of said articulated arm means is extensible in a photograph taking position and retractable in a photograph taking waiting position; and
a mounting means (10) is provided for mounting said photograph taking apparatus (4) on said articulated arm means (2);
**characterised in that** said device further comprises:
a background screen (27, 28) fixed to said articulated arm means (2); and
a printer for printing photographs taken by said photograph taking apparatus (4).

2. Photograph taking device (1) according to claim 1, **characterised in that** it further comprises an articulation means permitting to switch the assembly constituted by said articulated arm and said photograph taking apparatus on the other side relative to said mounting means (10), whereby the user can thus handle the articulated arm so that he/she can take a photograph with said photograph taking apparatus (4) located on the left or right side of the articulated arm, as desired.

3. Photograph taking device (1) according to claim 1 or 2, **characterised in that** it further comprises an articulation means permitting to switch said screen on the other side relative to said mounting means (10), whereby the user can thus handle the screen so that he/she can take a photograph with said photograph taking apparatus (4) located on the left or right side of the articulated arm, as desired.

4. Photograph taking device (1) according to any preceding claim, **characterised in that** the screen has two opposed faces having different visual aspects, whereby the user can handle the screen for reversing it so that the background of the photograph is visually different according to the selected face of the screen.

5. Photograph taking device (1) according to any preceding claim, **characterised in that** said first end (2-1) can be fixed to a stable vertical partition (3) such as a wall.

6. Photograph taking device (1) according to any preceding claim, **characterised in that** said mounting means (10) comprises a support stage (11) comprising, mounted on it, said photograph taking apparatus (4) and a free rotatable linkage (14) permanently fixed to said articulated arm means (2).

7. Photograph taking device (1) according to claim 6, **characterised in that** said support stage (11) further comprises a fixing means (12, 13) for fixing said photograph taking apparatus (4) to said support stage (11).

8. Photograph taking device (1) according to any preceding claim, **characterised in that** further comprises a memory means for saving in memory, under a filing form, said beforehand taken photographs.

9. Photograph taking device (1) according to any preceding claim, **characterised in that** it further comprises a wireless connection, in particular an aerial connection or an infrared connection, for establishing a communication link between said photograph taking apparatus (4) and said printer and/or said memory means.

10. Photograph taking device (1) according to any preceding claim, **characterised in that** it further comprises a lighting or flash means mounted in a fixed manner on said articulated arm.

## Patentansprüche

1. Fotoaufnahmevorrichtung (1), die Folgendes umfasst:
einen Fotoaufnahmeapparat (4),
ein Gelenkarmmittel (2), das ein erstes Ende (2-1), das an einer stabilen Stütze (3) zu befestigen ist, und ein zweites, freies, Ende (2-2) umfasst, wobei der Fotoaufnahmeapparat an dem zweiten Ende (2-2) des Gelenkarms an dem Gelenkarmmittel (2) befestigt ist und das zweite Ende (2-2) des Gelenkarmsmittels in eine Fotoaufnahmeposition ausgefahren und in eine Fotoaufnahmewarteposition eingezogen werden kann, und
ein Anbringungsmittel (10), das bereitgestellt wird, um den Fotoaufnahmeapparat (4) an dem Gelenkarmmittel (2) anzubringen,
**dadurch gekennzeichnet, dass** die Vorrichtung ferner Folgendes umfasst:
einen Hintergrundschirm (27, 28), der an dem Gelenkarmmittel (2) befestigt ist, und
einen Drucker zum Drucken von Fotografien, die durch den Fotoaufnahmeapparat (4) aufgenommen werden.

2. Fotoaufnahmevorrichtung (1) nach Anspruch 1, **dadurch gekennzeichnet, dass** sie ferner ein Gelenkmittel umfasst, das es erlaubt, die Baugruppe, die von dem Gelenkarm und dem Fotoaufnahmeapparat dargestellt wird, im Verhältnis zu dem Anbringungsmittel (10) auf die andere Seite zu schalten, wodurch der Benutzer folglich den Gelenkarm so handhaben kann, dass er/sie eine Fotografie aufnehmen kann, wobei der Fotoaufnahmeapparat (4) nach Wunsch auf der linken oder der rechten Seite des Gelenkarms angeordnet ist.

3. Fotoaufnahmevorrichtung (1) nach Anspruch 1 oder 2, **dadurch gekennzeichnet, dass** sie ferner ein Gelenkmittel umfasst, das es erlaubt, den Schirm im Verhältnis zu dem Anbringungsmittel (10) auf die andere Seite zu schalten, wodurch der Benutzer folglich den Schirm so handhaben kann, dass er/sie eine Fotografie aufnehmen kann, wobei der Fotoaufnahmeapparat (4) nach Wunsch auf der linken oder der rechten Seite des Gelenkarms angeordnet ist.

4. Fotoaufnahmevorrichtung (1) nach einem der vorhergehenden Ansprüche, **dadurch gekennzeichnet, dass** der Schirm zwei gegenüberliegende Seiten hat, die ein unterschiedliches visuelles Aussehen haben, wodurch der Benutzer den Schirm handhaben kann, um ihn umzudrehen, so dass der Hintergrund der Fotografie entsprechend der ausgewählten Seite des Schirms visuell unterschiedlich ist.

5. Fotoaufnahmevorrichtung (1) nach einem der vorhergehenden Ansprüche, **dadurch gekennzeichnet, dass** das erste Ende (2-1) an einer stabilen vertikalen Abtrennung (3), wie beispielsweise einer Wand, befestigt werden kann.

6. Fotoaufnahmevorrichtung (1) nach einem der vorhergehenden Ansprüche, **dadurch gekennzeichnet, dass** das Anbringungsmittel (10) ein Stützgerüst (11) umfasst, das an demselben angebracht den Fotoaufnahmeapparat (4) und eine frei drehbare Verbindung (14), die dauerhaft an dem Gelenkarmmittel (2) befestigt ist, umfasst.

7. Fotoaufnahmevorrichtung (1) nach Anspruch 6, **dadurch gekennzeichnet, dass** das Stützgerüst (11) ferner ein Befestigungsmittel (12, 13) zum Befestigen des Fotoaufnahmeapparats (4) an dem Stützgerüst (11) umfasst.

8. Fotoaufnahmevorrichtung (1) nach einem der vorhergehenden Ansprüche, **dadurch gekennzeichnet, dass** sie ferner ein Speichermittel umfasst, um die vorher aufgenommenen Fotografien, in einer Archivierungsform, im Speicher zu speichern.

9. Fotoaufnahmevorrichtung (1) nach einem der vorhergehenden Ansprüche, **dadurch gekennzeichnet, dass** sie ferner eine drahtlose Verbindung, insbesondere eine Antennenverbindung oder eine Infrarotverbindung, umfasst, um eine Kommunikationsverbindung zwischen dem Fotoaufnahmeapparat (4) und dem Drucker und/oder dem Speichermittel herzustellen.

10. Fotoaufnahmevorrichtung (1) nach einem der vorhergehenden Ansprüche, **dadurch gekennzeichnet, dass** sie ferner ein Beleuchtungs- oder Blitzmittel umfasst, das auf eine unbewegliche Weise an dem Gelenkarm angebracht ist.
